(19) **Europäisches Patentamt**
**European Patent Office**
**Office européen des brevets**

(11) **EP 3 151 182 A1**

(12) **EUROPEAN PATENT APPLICATION**

(43) Date of publication:
05.04.2017 Bulletin 2017/14

(51) Int Cl.:
*G06Q 30/00* (2012.01)

(21) Application number: 16166824.9

(22) Date of filing: 25.04.2016

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.09.2015 CN 201510633238

(71) Applicant: **Xiaomi Inc.**
**Beijing 100085 (CN)**

(72) Inventor: **DONG, Junjie**
**Beijing 100085 (CN)**

(74) Representative: **Delumeau, François Guy et al**
**Cabinet Beau de Loménie**
**158, rue de l'Université**
**75340 Paris Cedex 07 (FR)**

(54) **METHOD, APPARATUS AND DEVICE FOR CHANGING DISPLAY BACKGROUND**

(57) The present disclosure relates to a method, an apparatus and a device for changing a display background, which pertains to the field of computer technology. The method includes: acquiring (101, 202) a user preference label set of a current user and a background label set of each candidate background of a plurality of candidate backgrounds; determining (102, 203, 304) a matching degree between the current user and each candidate background based on the user preference label set of the current user and the background label set of the candidate background; selecting (103, 204, 305) one or more recommended backgrounds for the current user based on the matching degrees; and sending (104, 205, 306) the selected one or more recommended backgrounds to a mobile terminal of the current user for background change.

Fig.1

**Description**

**TECHNICAL FIELD**

The present disclosure generally relates to the field of mobile communication technology, and more particularly, to a method, an apparatus and a device for changing a display background.

**BACKGROUND**

With growing popularity of smart mobile terminals, more and more users like a variety of application functions provided by the mobile terminals. For example, in a smart mobile terminal, a lock screen interface and a desktop are applications which the user uses most frequently. The mobile terminal can provide various backgrounds for the user to apply one to the lock screen interface or the desktop. The enrichment of the background can influence attraction of the mobile terminal to the user.

Most users will get tired of a background over a time period and want to change to a new background. In the related art, a display background such as a background of a lock screen or a desktop typically originates from a picture stored inside the mobile terminal of the user, or an on-line background picture adapted specially to the mobile terminal. The change of the background is required to be manually done by the user through a desktop configuration program.

**SUMMARY**

The present disclosure provides a method, an apparatus and a device for changing a display background. It can initiatively change a display background of a mobile terminal based on user preference.

According to a first aspect of embodiments of the present disclosure, there is provided a method for changing a display background, which is suitable to be implemented by a server, comprising steps of:

acquiring a user preference label set of a current user and a background label set of each candidate background of a plurality of candidate backgrounds;

determining a matching degree between the current user and each candidate background based on the user preference label set of the current user and the background label set of the candidate background;

selecting one or more recommended backgrounds for the current user based on the matching degrees; and

sending the selected one or more recommended backgrounds to a mobile terminal of the current user for background change.

In the above method for changing a display background, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

Optionally, before the step of acquiring a user preference label set of a current user and a background label set of each candidate background, the method comprises steps of:

acquiring calendar information or personal information of the current user, selecting backgrounds with themes corresponding to the calendar information or the personal information, and determining the selected backgrounds as the plurality of candidate backgrounds.

Optionally, the method further comprises a step of:

after the mobile terminal of the current user receives the one or more recommended backgrounds, changing a background of a desktop and/or a lock screen interface of the mobile terminal with the one or more recommended backgrounds.

Optionally, the step of determining a matching degree between the current user and each candidate background based on the user preference label set of the current user and the background label set of the candidate background comprises steps of:

acquiring a correlation between each user preference label in the user preference label set of the current user and each background label in the background label set of a current candidate background, wherein a correlation between a user preference label and a background label is determined according to a number of times that both of the user preference label and the background label are present in the user preference label set of the same user or in the background label set of the same background;

summing up correlations between all of the user preference labels in the user preference label set of the current user and all of the background labels in the background label set of the current candidate background, averaging the sum against a total number of the user preference labels, to obtain a matching degree between the current user and the current candidate background; and

ranking the matching degrees between the current user and all of the candidate backgrounds, to enable selecting one or more recommended backgrounds for the current user based on the matching degrees.

Optionally, the step of summing up correlations between all of the user preference label set of the user preference labels of the background label set of the current user and all of the background labels of the current candidate background comprises a step of:

according to a weight of each of the user preference labels of the current user, summing up correlations between all of the user preference labels of the current user and all of the background labels of the current candidate background.

Optionally, the weight of each of the user preference labels is determined according to a basic weight and a behavior weight, the basic weight being a predetermined score value for each of the user preference labels, and the behavior weight being determined according to a preference evaluation for each of the user preference labels.

Optionally, the step of determining the behavior weight according to a preference evaluation for each of the user preference labels comprises steps of:

determining the behavior weight according to all score values of preference evaluation of each of the user preference labels during a preset time period where a corresponding background is in use,

wherein a value of the behavior weight increases with increase of a sum of said all score values of the preference evaluation, and decreases with decrease of the sum of said all score values of the preference evaluation, and wherein the value of the behavior weight has an increasing or decreasing rate smaller than a rate at which said sum increases or decreases during the preset time period where the corresponding background is in use, and wherein after said sum reaches a preset value, the value of the behavior weight tends to be constant.

Optionally, the step of selecting one or more recommended backgrounds for the current user based on the matching degrees comprises a step of:

selecting a preset number of backgrounds ranked in the top for the current user based on the matching degrees.

According to a second aspect of embodiments of the present disclosure, there is provided an apparatus for changing a display background, which is suitable to be implemented as a server, comprising:

an acquiring module configured to acquire a user preference label set of a current user and a background label set of each candidate background of a plurality of candidate backgrounds;

a matching module configured to determine a matching degree between the current user and each candidate background based on the user preference label set of the current user and the background label set of the candidate background which are acquired by the acquiring module;

a selecting module configured to select one or more recommended backgrounds for the current user based on the matching degrees determined by the matching module; and

a sending module configured to send the one or more recommended backgrounds selected by the selecting module to a mobile terminal of the current user for background change.

In the above apparatus for changing a display background, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

Optionally, the apparatus further comprises:

a candidate-background determining module configured to acquire calendar information or personal information of the current user, select backgrounds with themes corresponding to the calendar information or the personal information, and determine the selected backgrounds as the plurality of candidate backgrounds.

Optionally, the matching module includes:

a first processing sub-module configured to acquire a correlation between each user preference label in the user preference label set of the current user and each background label in the background label set of a current candidate background, wherein a correlation between a user preference label and a background label is determined according to a number of times that both of the user preference label and the background label are present in the user preference label set of the same user or in the background label set of the same background;

a second processing sub-module configured to sum up correlations between all of the user preference labels in the user preference label set of the current user and all of the background labels in the background label set of the current candidate background acquired by the first processing sub-module, average the sum against a total number of the user preference labels of the current user, to obtain a matching degree between the current user and the current candidate background; and

a third processing sub-module configured to rank the matching degrees between the current user and all of the candidate backgrounds acquired by the second processing sub-module, to enable selecting one or more recommended backgrounds for the current user based on the matching degrees.

Optionally, the matching module further includes:

a weight sub-module configured to determine a weight for each of the user preference labels; and

the second processing sub-module is configured to, according to a weight of each of the user preference labels of the user preference label set of the current user, which is acquired by the weight sub-module, sum up correlations between all of the user preference labels of the background label set of the current user and all of the background labels of the current candidate background.

Optionally, the weight sub-module includes:

a first weight unit configured to determine a basic weight as a predetermined score value for each of the user preference labels;

a second weight unit configured to determine a behavior weight according to preference evaluation for each of the user preference labels; and

a combining unit configured to determine the weight of each of the user preference labels according to the basic weight determined by the first weight unit and the behavior weight determined by the second weight unit.

According to a third aspect of embodiments of the present disclosure, there is provided an apparatus for changing a display background, which is suitable to be implemented as a terminal, comprising:

a label collecting module configured to collect a user preference label set of a current user, and send the user preference label set of the current user to a server, for the server to determine a matching degree between the current user and each candidate background of a plurality of candidate backgrounds based on the received user preference label set of the current user and a background label set of each candidate background, and to select one or more recommended backgrounds for the current user based on the matching degrees; and

a background changing module configured to receive the selected one or more recommended backgrounds which are sent by the server, for background change.

In the above apparatus for changing a display background, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

Optionally, the apparatus further includes:

> a calendar/personal-information uploading module configured to upload to the server calendar information or personal information of the current user, for the server to select backgrounds with themes corresponding to the calendar information or the personal information, and to determine the selected backgrounds as candidate backgrounds.

According to a fourth aspect of embodiments of the present disclosure, there is provided a device for changing a display background, , which is suitable to be implemented as a server, comprising:

> a processor; and a memory for storing instructions executable by the processor;
> wherein the processor is configured to perform:
>
>> acquiring a user preference label set of a current user and a background label set of each candidate background of a plurality of candidate background;
>> determining a matching degree between the current user and each candidate background based on the user preference label set of the current user and the background label set of the candidate background;
>> selecting one or more recommended backgrounds for the current user based on the matching degrees; and
>> sending the selected one or more recommended backgrounds to a mobile terminal of the current user for background change.

In the above device for changing a display background, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

According to a fifth aspect of embodiments of the present disclosure, there is provided a device for changing a display background, which is suitable to be implemented as a terminal, comprising:

> a processor; and a memory for storing instructions executable by the processor;
> wherein the processor is configured to perform:
>
>> collecting a user preference label set of a current user, and sending the user preference label set of the current user to a server, for the server to determine a matching degree between the current user and each candidate background of a plurality of candidate backgrounds based on the user preference label set of the current user and a background label set of each candidate background, and to select one or more recommended backgrounds for the current user based on the matching degrees; and
>> receiving the selected one or more recommended backgrounds which are sent by the server, for background change.

In the above device for changing a display background, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

The advantages and features of the apparatus and devices according to the embodiments of the present disclosure are the same with those of the above described methods and will not be repeated here.

In one particular embodiment, the steps of the method for changing a display background are determined by computer program instructions.

Consequently, according to a sixth aspect, the invention is also directed to a computer program for executing the steps of a method for changing a display background as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to embodiments of the present disclosure may have the following beneficial effects.

In the present disclosure, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

In the present disclosure, according to calendar information or personal information, backgrounds with themes corresponding to the calendar information or the personal information can be selected as candidate backgrounds. Thereby, it can initiatively change a display background according to the calendar information or the personal information as well as the user preference, providing convenience for the user and satisfying the user needs.

In the present disclosure, matching the current user with candidate backgrounds can be performed based on the weights of the user preference labels. Thereby, the matching can be more consistent with user needs.

In the present disclosure, a weight of a user preference label can be determined based on a basic weight and a behavior weight, and the behavior weight can be determined based on user preference evaluation. Thereby, it can more accurately reflect the change of the user preference.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart illustrating a method for changing a display background according to an exemplary embodiment of the present disclosure.

Fig. 2 is a flow chart illustrating another method for changing a display background according to an exemplary embodiment of the present disclosure.

Fig. 3 is a flow chart illustrating another method for changing a display background according to an exemplary embodiment of the present disclosure.

Fig. 4 is a block diagram of an apparatus for changing a display background according to an exemplary embodiment of the present disclosure.

Fig. 5 is a block diagram of another apparatus for changing a display background according to an exemplary embodiment of the present disclosure.

Fig. 6 is a block diagram of another apparatus for changing a display background according to an exemplary embodiment of the present disclosure.

Fig. 7 is a block diagram of a device for changing a display background according to an exemplary embodiment of the present disclosure.

Fig. 8 is a block diagram of another device for changing a display background according to an exemplary embodiment of the present disclosure.

Fig. 9 is a block diagram of a device according to an exemplary embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

The terms used herein are merely for describing a particular embodiment, rather than limiting the present disclosure. As used in the present disclosure and the appended claims, terms in singular forms such as "a"; "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present disclosure, a first element can also be referred to as a second element. Similarly, a second element can also be referred to as a first element. Depending on the context, a term "if" as used herein can be interpreted as "when", "where" or "in response to":

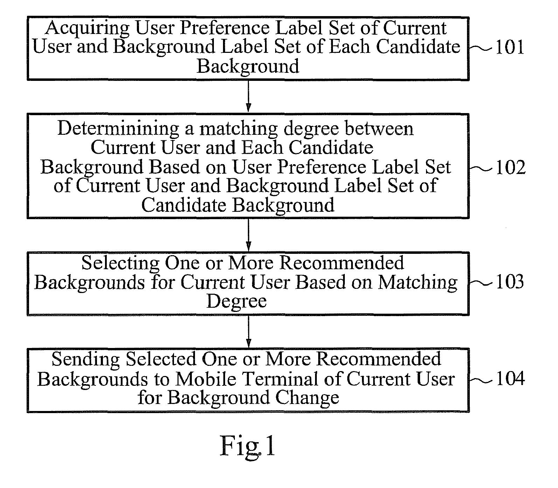

Fig. 1 is a flow chart illustrating a method for changing a display background according to an exemplary embodiment of the present disclosure, including the following steps.

In step 101, a user preference label set of a current user and a background label set of each candidate background of a plurality of candidate backgrounds are acquired. The user preference label set comprises at least one user preference label and the background label set comprises at least one user preference label.

The preference of a user in backgrounds can be represented by a set of user preference labels (e.g. a preference label which comprises word strings such as "fresh"; "hazy", "abstract", etc.). For a candidate background, a set of background labels (e.g. a background label which comprises word strings such as "fresh"; "hot"; etc.) can be provided to represent the style(s) of the background.

In step 102, a matching degree between the current user and each candidate background is determined based on the user preference label set of the current user and the background label set of the candidate background.

The present step can include:

acquiring a correlation between each user preference label in the user preference label set of the current user and each background label in the background label set of a current candidate background, wherein a correlation between a user preference label and a background label is determined according to a number of times that both of the user preference label and the background label are present in the user preference label set of the same user or in the background label set of the same background;
summing up correlations between all of the user preference labels of the current user and all of the background labels of the current candidate background, averaging the sum against a total number of the user preference labels of the current user, to obtain a matching degree between the current user and the current candidate background; and
ranking the matching degrees between the current user and all of the candidate backgrounds, to enable selecting one or more recommended backgrounds for the current user based on the matching degrees.

Wherein summing up correlations between all of the user preference labels of the current user and all of the background labels of the current candidate background includes: according to a weight of each of the user preference labels of the current user, summing up correlations between all of the user preference labels of the current user and all of the background labels of the current candidate background.

In step 103, one or more recommended backgrounds are selected for the current user based on the matching degrees.

In the present step, a preset number of backgrounds ranked in the top can be selected for the current user based on the matching result.

In step 104, the selected one or more recommended backgrounds are sent to a mobile terminal of the current user for background change.

It should be noted that, the above steps are generally performed by a server, However, the above steps can also be applied in a mobile terminal when the mobile terminal has a data processing capability as required.

According to the present embodiment, in the present disclosure, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

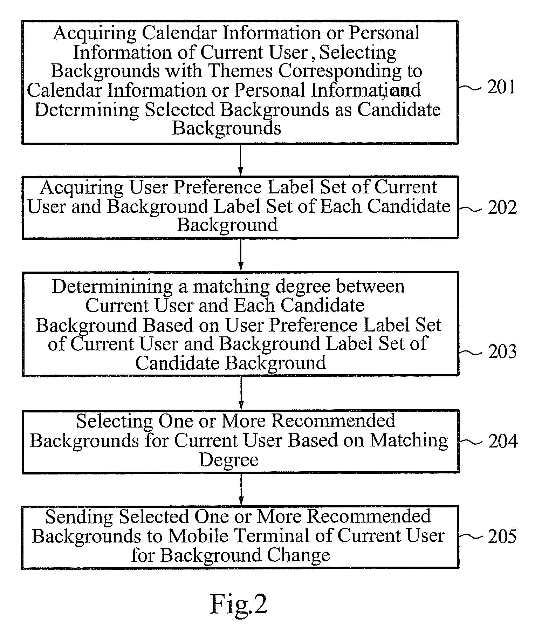

Fig. 2 is a flow chart illustrating another method for changing a display background according to an exemplary embodiment of the present disclosure.

The method includes the following steps.

In step 201, calendar information or personal information of the current user are acquired, backgrounds with themes corresponding to the calendar information or the personal information are selected, and the selected backgrounds are determined as candidate backgrounds.

In the present step, backgrounds with themes corresponding to calendar information or personal information can be selected. For example, backgrounds with a theme of a national celebration day, or backgrounds with a theme of a zodiac sign based on the zodiac sign of the user can be selected.

In step 202, a user preference label set of a current user and a background label set of each candidate background of a plurality of candidate backgrounds are acquired.

In step 203, a matching degree between the current user and each candidate background is determined based on the user preference label set of the current user and the background label set of the candidate background.

The present step can refer to the description of the step 102, which will not be repeated herein.

In step 204, one or more recommended backgrounds are selected for the current user based on the matching degrees.

In the present step, a preset number of backgrounds ranked in the top can be selected for the current user based on the matching degrees. Where, the preset number is not limited, and can be selected as desired, such as 1, 2 or 3, etc.

In step 205, the selected one or more recommended backgrounds are sent to a mobile terminal of the current user for background change.

It should be noted that after the above steps, after the mobile terminal of the current user receives the recommended backgrounds, the desktop of the mobile terminal and / or the lock screen interface can be changed to the recommended backgrounds.

It should be noted that, the above steps are generally performed by a server, However, the above steps can also be applied in a mobile terminal when the mobile terminal has a data processing capability as required.

According to the present embodiment, in the present disclosure, based on calendar information or personal information, backgrounds with themes corresponding to the calendar information or the personal information can be selected as candidate backgrounds. Then, a user preference label set of a current user and a background label set of each candidate background are acquired; the current user is matched with each candidate background based on the user preference label set of the current user and the background label set of the candidate background; one or more recommended backgrounds are selected and pushed to a mobile terminal of the current user for changing background. Thereby, it can initiatively change a display background according to the calendar information or the personal information as well as the user preference, providing convenience for the user and satisfying the user needs.

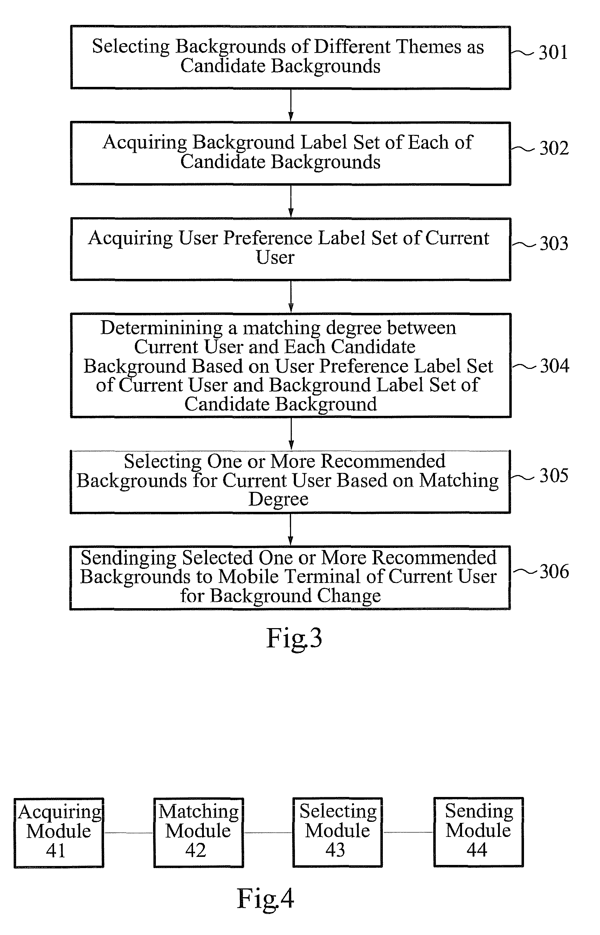

Fig. 3 is a flow chart illustrating another method for changing a display background according to an exemplary embodiment of the present disclosure.

The method will be described as applied in a server, for example. However, the present disclosure is not limited thereto, and the method can also be applied in a mobile terminal when the mobile terminal has a high data processing capability.

In the present disclosure, the server is a background resource server, for example. The background resource server provides various background resources and selects a background which matches a preset condition and pushes the background to a mobile terminal. Then, the mobile terminal can acquire the background pushed by the background resource server through its desktop background management program. For the acquiring, the mobile terminal can initiatively download the background from the background resource server or can receive the background sent from the background resource server. The mobile terminal can download at a fixed time every day. After the mobile terminal acquires the background pushed by the background resource server, the mobile terminal changes the background at that time or when a preset condition is satisfied.

In the present disclosure, the server can manage user information and user preference information uploaded by the mobile terminal, store and manage various background pictures, and provide a backstage program for uploading and managing background pictures. Most importantly, the server can automatically match the user preference with candidate backgrounds, so as to push a background picture that is the most suitable for the user to the mobile terminal of the user based on a matching result. In the present disclosure, the mobile terminal can be installed with client software. The client software can manage register, log in and modification of user accounts, collect user preference information and feed the user preference information to the server, search for a background and download a background periodically from the server, and transmit a background to a desktop background management program to change a background.

Hereinafter the method as shown in Fig. 3 will be described in detail. The method includes the following steps.

In step 301, backgrounds of different themes are selected as candidate backgrounds.

In the present step, the server selects backgrounds of different themes of various kinds. The themes of the backgrounds can be determined based on calendar information or personal information. Therefore, the server can select backgrounds with themes corresponding to the calendar information or the personal information as candidate backgrounds based on calendar information or personal information. The calendar information is for example a festival, a holiday, a solar term, and the like. The personal information is for example, a birthday, a constellation, a wedding anniversary, and the like. For example, on a traditional spring festival, desktop backgrounds with strong festive atmosphere can be selected; on a legal holiday, such as a national celebration day, backgrounds relevant to a National Day can be selected; on a birthday, desktop backgrounds with cakes and flowers can be selected. For some young people believing in constellation and fortune, desktop backgrounds suggesting fortune based on the constellation of the user can be selected.

In step 302, a background label set of each of the candidate backgrounds is acquired.

Since users may have different aesthetic tastes, for example, some like bright colors, while others prefer dim light, the backgrounds can be provided with different background labels. A background label can be defined by a background designer, a background uploading user or a background applying user, or can be defined by the server. For the same theme, backgrounds of different styles can be provided for the user. A style corresponding to a background is represented by a background label.

The background label can be defined in various forms. For example, a background label can be fresh, hazy, hot or rock, etc. A background can have more than one background label.

In step 303, a user preference label set of a current user is acquired.

A user preference to backgrounds can be represented by a user preference label set. A user preference label set can be composed of a group of labels. That is, there can be more than one labels representing user preference, and each of the labels can have a different weight.

For example, a user likes fresh, hazy and abstract backgrounds, then the user preference label set of the user is "fresh, hazy and abstract".

In the present disclosure, users' preference to a background can be determined through any one of the following manners.

1) Determining based on records of an evaluation mechanism of the server. An evaluation mechanism records a user's evaluation to a current background: like, dislike, neutral, etc. For example, a user's evaluation on a background with a background label "fresh" is "like", and on a background with a background label "bright" is "neutral". In this case, the user preference label set of this user is: "fresh, bright".

2) Determining based on the initiative user selection recorded in the server. The server can record some backgrounds initiatively selected by the user. Generally, the selected backgrounds are backgrounds the user likes, and backgrounds not selected by the user are backgrounds the user dislikes. For example, a user initiatively selects a background with a background label "fresh", it can be determined that the user preference label of this user is: "fresh".

3) Determining based on self-description of the user recorded in the server. The server can record a user preference label edited by the user himself, such as fresh, hazy, etc., or can receive a user preference label directly fed back by a user to the server.

For the user preference labels, each of the labels can have a different weight, also referred to as a weight of a user preference label.

When a user applies a background for a first time, the user can select a label as the user preference label, or add a label edited by the user himself as the user preference label. At this time, the weight of each label can be the same. For example, the user preference label set can include "fresh" and "hazy"; and the label "fresh" and the label "hazy" can have the same weight.

Subsequently, if the user likes a certain background more, the user preference label corresponding to the background label of the background will have an increased weight. On the contrary, if the user dislikes a certain background, the user preference label corresponding to the background label of the background will have a decreased weight. For example, if subsequently, the user selects more backgrounds each with a background label "fresh", the user preference label "fresh" will have an increased weight; and if subsequently, the user selects "dislike" evaluation on backgrounds each with a background label "hazy", or the user does not select a "hazy" background for a long time, the user preference label "hazy" will have a decreased weight.

In the present disclosure, the weights can be determined through a weight correction algorithm. The weights can be determined in consideration of two factors: time and frequency. In a preset time period, the more number of evaluation "like" on a certain label in the user preference label set, the weight of the label will be increased, and vice versa. However, when a weight is increased or decreased to a certain degree, the increasing or decreasing rate will be lowered.

In the present disclosure, the weight correction algorithm can be described as follows.

A weight value consists of two parts, that is: W = B+F.

Where, W denotes a weight value.

B denotes a basic weight. A basic weight can be determined by the user, or can be determined according to a preference description of the user.

F denotes a behavior weight. A behavior weight can be determined based on user evaluation.

Generally, a basic weight is relatively constant. Once a user selects a certain label, the user can determine a constant value. Generally, a basic weight of each label can be the same. For example, the labels "label" and "hary" in the above user preference label set can have the same weight, such as a constant score value 2.

The behavior weight can be determined based on preference evaluation for each of the user preference labels during a preset time period where a background is in use. Therefore, generally, the behavior weight is not constant and can vary over time. For example, the preference evaluation includes three levels: "like", "neutral" and "dislike", respectively corresponding to score values of 3, 2 and 1 from high to low respectively. In other words, each user preference label may be evaluated for multiple times during a time period and thus may have various score values (for example, 3, 2, 1...) of preference evaluation.

The behavior weight F can be calculated as: $F = R(T, S)$.

Where, S denotes a total score value (a sum, for each user preference label, of all score values of preference evaluation during a fixed time period), T denotes a time period, and R denotes a calculation function.

In the present disclosure, there are three kinds of time periods: a most recent week, a most recent month, a period since when the user registered at the server till today. It should be noted that the above mentioned time periods are only illustrative, there can be other kinds of time periods depending on practical application.

Taking all three kinds of time periods in consideration, it can be derived that:

$$F = R1(T1,S1) + R2(T2, S2) + R3(T3, S3)$$

Where, R1(T1,S1) denotes a function R1 of a total score (S1) during a most recent week (T1).

R2(T2,S2) denotes a function R2 of a total score (S2) during a most recent month (T2).

R3(T3,S3) denotes a function R3 of a total score (S3) during a time period (T3) since when the user registered till today.

For a newly registered user, or a user registered a short time ago, a recorded time period is too short, such as less than 1 minute. Then, T can be directly taken as 0.

The above R1, R2 and R3 are three different functions, wherein function values of R1, R2 and R3 are in an order: R1 > R2 > R3. Thus, the behavior of the user more recently can be given more weights.

As regards the selection of the functions R1, R2 and R3, in the present disclosure, logarithmic functions or similar functions can be used to meet the following requirement: with increase or decrease of the total score S, a function value R will be increased or decreased with a rate smaller than a rate at which S increases or decreases, and when S increases or decreases to a certain degree, the function value R will approach a constant value and will not increase or decrease any more. Therefore, in the present disclosure, a logarithmic function R can satisfy the above requirement.

It should be noted that the above steps 302 and 303 can be performed in other orders.

In step 304, a matching degree between the current user and each of the candidate backgrounds is determined according to the user preference label set of the current user and the background label set of each of the candidate backgrounds.

In the present disclosure, matching a user with a background is performed by determining correlations between user preference labels and background labels.

In the present step, a correlation between each of the user preference labels of the current user and each of the background labels of the current candidate background is acquired, and all of the correlations are summed up. The sum is averaged against a total number of the user preference labels of the current user, to obtain a correlation between the current user and the current candidate background. A matching degree between the current user and each of the candidate backgrounds is acquired, and the matching degrees are ranked. A matching result of the current user and the candidate backgrounds can be obtained based on the ranking result.

The present step can be described in detail as follows.

In the present disclosure, after a correlation between each of the user preference labels of the current user and each of the background labels of a current candidate background are acquired, firstly, each of the user preference labels is compared with each of the background labels, to obtain correlations between the user preference labels and the background labels. Then, the correlations between the user preference labels and the background labels are summed up, taking account of weights of the user preference labels. That is, a weighted sum of the correlations are calculated, to obtain a total score. The total score is divided by the total number of the user preference labels to obtain a final score which is a matching degree between the current user and the current candidate background. Matching degrees between the current user and all of the candidate backgrounds are ranked, and the highest final score is considered as the highest matching degree, the second highest final score being the second highest matching degree, and so on.

It is assumed that the labels are denoted by lowercase letters a, b, c, d...; the correlations of the labels are calculated with a function R which can be a probability function such as a percentage function or the like, $R(a, b)$ denotes a correlation between a and b; a weight of a label is calculated by a function W, and $W(a)$ denotes a user preference weight of a label a.

It is assumed that, the user preference label set of the current user is a and b, and background label set of a candidate background is c and d. Then, the total score M can be obtained through the following equation.

$$M = (R(a,c) + R(a,d)) * W(a) + (R(b,c) + R(b,d)) * W(b)$$

The final score F= M/2. That is, a matching degree between the current user and the current candidate background is F = M/2.

Since there are two user preference labels a and b, the final score is M divided by 2, to obtain an average value. If there are a number N of labels, M will be divided by N.

If there are user preference labels a, b and c, then:

$$M = (R(a,c) + R(a,d)) * W(a) + (R(b,c) + R(b,d)) * W(b)+ (R(e,c) + R(e,d)) * W(e)$$

The final score is F = M/3.

If there are background labels c, d and e, then:

$$M = (R(a,c) + R(a,d)+R(a,e)) * W(a) + (R(b,c) + R(b,d)+R(b,e)) * W(b)$$

The final score is F = M/2.

After the matching degree between the current user and the current candidate background is obtained, the matching degrees between the current user and all of the candidate backgrounds are ranked, to identify the highest matching degree.

It should be noted that, the above correlation can be acquired by directly searching a correlation table which contains correlations already calculated and determined.

The above correlation between a user preference label and a background label can be determined according to a number of times that both of the user preference label and the background label are present in a user preference label set of the same user, or a number of times that both of the user preference label and the background label are present in a background label set of the same background.

For example, a correlation R(a,c) is determined according to a ratio of the number of times that both of the labels a, c are present in a user preference label set or a background label set to a total number of the number of users and the number of the backgrounds. R(a,c) is a probability calculation result. If there is a high probability that both of the labels are present in a user preference label set or a background label set, it means that the two labels have a high correlation. Otherwise, the two labels have a low correlation. For example, generally, labels "fresh" and "hazy" may have a high correlation, and labels "bright" and "hazy" may have a low correlation.

In the present disclosure, the correlation can be determined through the following process.

For example, on the server, there are a number N of users and a number M of backgrounds. Where, each of the users corresponds to a user preference label set, and each of the backgrounds corresponds to a background label set. The number of labels for each of the users or for each of the backgrounds should be larger or equal to 1.

The correlation may be determined through the following process.

1) A mapping table X = { } is defined. In the table X, every two labels can be considered as a group, and a counting number of times that both of the two labels are present in a user preference label set or a background label set is recorded.

2) A process is recycled to acquire, at each time, a label of a user or a background, until all of the labels of all of the users and all of the backgrounds are acquired, to form a label list {a, b, c, d, e, d .....}.

    2.1) Every pair of labels is obtained from the label list: {a, b}, {a, c} , {a, d}, .... {b, c}, {b, d}, .... {c, d}, {c, e}... .....

    2.2) These label groups are stored in the table X. If a group of labels is already in the table X, the counting number of the group is increased by 1.

3) The sum of the total number of the users and the total number of the backgrounds is acquired as (N + M). In the table X, a ratio of the counting number of each label group to the sum of the total number of the users and the total number of the backgrounds is a correlation of the two labels in the label group.

It should be further noted that, when a user or a background only has one label, in the above process, the situation is counted in the denominator, but not counted in the numerator. It is because a single label also represents a combination of preference, and can also influence the correlation of the labels. After the above correlations are calculated, the correlations are stored in a correlation table. A correlation can be directly acquired from the correlation table according to a combination of labels as desired, without further calculation. In addition, the table X is stored. When a new background or a new user is added, the counting numbers of the groups of labels can be calculated again, and the correlation table can be updated accordingly. Alternatively, if a user preference label A of a user is replaced by another user preference label B, a counting number of a label group containing the replaced user preference label A is decreased by 1 for the table X, and a counting number of a label group containing said another user preference label B with which the user preference label A is replaced is increased by 1 for the table X. Thereby, the table X is updated, and the correlation table is updated accordingly. Generally, a label set of a background once determined, will not be modified.

It should be noted that, in the present disclosure, each of the user preference labels is paired with each of the background labels, a user preference label is not paired with another user preference label, and a background label is not paired with another background label.

In step 305, one or more recommended backgrounds are selected for the current user according to the matching degrees.

In the present step, according to the final score F, a highest final score is determined as having a highest matching degree, a second highest final score is determined as having a second highest matching degree, and so on. Thereby, one or more recommended backgrounds ranked at the top can be selected. The server can select only a background having the highest final score as the recommended background, or can select a background having the highest final score and a background having the second highest final score as the recommended backgrounds.

In step 306, the selected one or more recommended backgrounds are sent to the mobile terminal of the current user for a change.

In the present step, the selected one or more recommended backgrounds are pushed to the mobile terminal of the current user for a change.

After the mobile terminal receives the one or more recommended backgrounds, the mobile terminal can change the desktop and/or the lock screen interface of the mobile terminal to a recommended background through the desktop management program.

It is assumed that it is a national celebration day, backgrounds with a theme of the national celebration day are selected in step 301, and a recommended background selected from the backgrounds with a theme of the national celebration day can be pushed to the current user.

If in step 301, backgrounds with a theme based on personal information such as constellation, a recommended background selected from the backgrounds with a theme of constellation can be pushed to the current user.

It should be noted that if in step 301, the backgrounds are not selected based on different types of themes, all of the backgrounds will be selected and matched.

It should be noted that in the present disclosure, a selected recommended background can be pushed to the mobile terminal for a change at every preset period such as 7 days.

According to the embodiments of the present disclosure, a recommended background can be initiatively pushed to a user based on the preference of the user. It can save a trouble to search and select various backgrounds for the user, and can save a lot of time in searching. It can also save concerns for the user, and the user barely needs to learn how to change different backgrounds. It is convenient particularly for a user not familiar with a mobile terminal. In addition, the background can be pushed based on calendar information and personal information. For example, on a national celebration day, a background with a theme of the national celebration day, which has a style the user likes can be pushed. Thereby, it can increase fun in operation of a mobile terminal for the user, and it can avoid monotonous backgrounds.

Corresponding to the above embodiments regarding a method for changing a display background, the present disclosure also provides embodiments regarding an apparatus for changing a display ground and a relevant device.

Fig. 4 is a block diagram of an apparatus for changing a display background according to an exemplary embodiment of the present disclosure.

As shown in Fig. 4, the apparatus for changing a display background includes: an acquiring module 41, a matching module 42, a selecting module 43 and a pushing module 44.

The acquiring module 41 is configured to acquire a user preference label set of a current user and a background label set of each candidate background.

The matching module 42 is configured to match the current user with each candidate background based on the user preference label set of the current user and the background label set of the candidate background which are acquired by the acquiring module 41.

The selecting module 43 is configured to select one or more recommended backgrounds for the current user based on the matching result from the matching module 42.

The pushing module 44 is configured to push the one or more recommended backgrounds selected by the selecting module 43 to a mobile terminal of the current user for background change.

In the present embodiment of the present disclosure, a user preference label set of a current user and a background label set of each candidate background are acquired; the current user is matched with each candidate background based on the user preference label set of the current user and the background label set of the candidate background, to obtain a matching result; one or more recommended backgrounds are selected for the current user based on the matching result; and the selected one or more recommended backgrounds are pushed to a mobile terminal of the current user for changing background. Thereby, it can initiatively change a display background according to user preference, providing convenience for the user and satisfying the user needs.

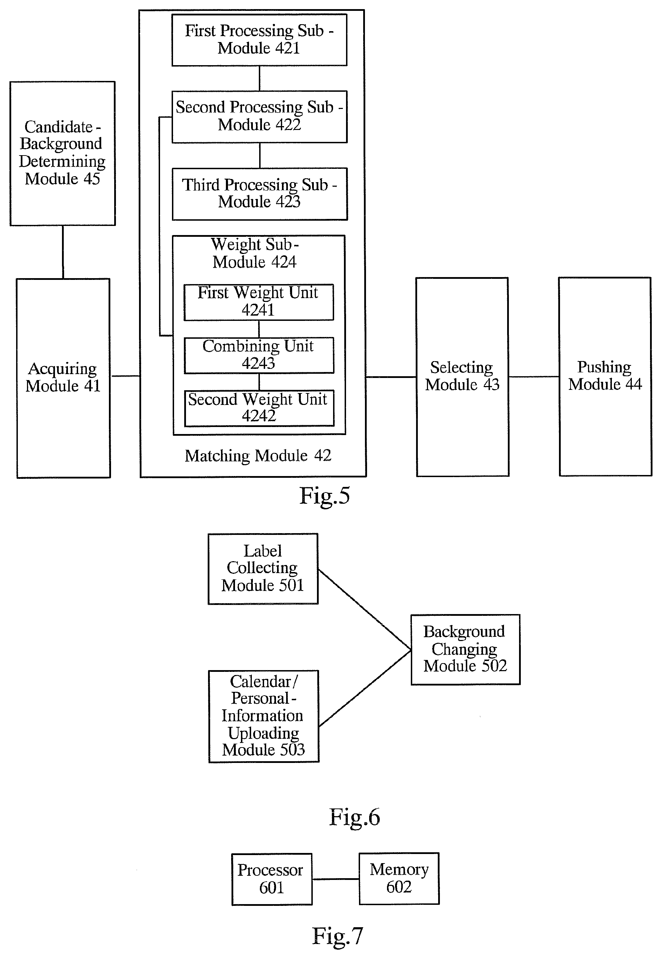

Fig. 5 is a block diagram of another apparatus for changing a display background according to an exemplary embodiment of the present disclosure.

As shown in Fig. 5, the apparatus for changing a display background includes: an acquiring module 41, a matching module 42, a selecting module 43, a pushing module 44 and a candidate-background determining module 45.

Details of the acquiring module 41, the matching module 42, the selecting module 43 and the pushing module 44 can be referred to the description of Fig. 4.

The candidate-background determining module 45 is configured to acquire calendar information or personal information of the current user, select backgrounds with themes corresponding to the calendar information or the personal information, and determine the selected backgrounds as candidate backgrounds. The acquiring module 41 acquires a background label set of each of the candidate backgrounds determined by the candidate-background determining module 45.

The matching module 42 includes: a first processing sub-module 421, a second processing sub-module 422 and a third processing sub-module 423.

The first processing sub-module 421 is configured to acquire a correlation between each user preference label in the user preference label set of the current user and each background label in the background label set of a current candidate background, wherein a correlation between a user preference label and a background label is determined according to a number of times that both of the user preference label and the background label are present in the user preference label set of the same user or in the background label set of the same background.

The second processing sub-module 422 is configured to sum up correlations between all of the user preference labels of the current user and all of the background labels of the current candidate background acquired by the first processing sub-module 421, average the sum against a total number of the user preference labels of the current user, to obtain a matching degree between the current user and the current candidate background.

The third processing sub-module 432 is configured to rank the matching degrees between the current user and all of the candidate backgrounds acquired by the second processing sub-module 422, to obtain the matching result of the current user and each of the candidate backgrounds according to the ranking result.

The matching module 42 further includes: a weight sub-module 424.

The weight sub-module 424 is configured to determine a weight for each of the user preference labels.

The second processing sub-module 422 is configured to, according to a weight of each of the user preference labels of the current user, which is acquired by the weight sub-module 424, sum up correlations between all of the user preference labels of the current user and all of the background labels of the current candidate background.

The weight sub-module 424 includes: a first weight unit 4241, a second weight unit 42142 and a combining unit 4243.

The first weight unit 4241 is configured to determine a basic weight according to a description of preference of the user.

The second weight unit 4242 is configured to determine a behavior weight according to preference evaluation scores of the user.

The combining unit 4243 is configured to determine the weight of each of the user preference labels according to the basic weight determined by the first weight unit 4241 and the behavior weight determined by the second weight unit 4242.

Where, the behavior weight being determined according to preference evaluation scores of the user includes: the behavior weight being determined according to preference evaluation scores of the user during a preset time period when a corresponding background is in use, wherein a value of the behavior weight increases with increase of a sum of the preference evaluation scores of the user, decreases with decrease of the sum of the preference evaluation scores of the user, with an increasing or a decreasing rate smaller than a rate the sum of the preference evaluation scores of the user increases or decreases during the preset time period when the corresponding background is in use, and after the sum of the preference evaluation scores reaches a preset value, the value of the behavior weight tends to be constant.

The above apparatus of the present disclosure is provided on a server. It should be noted that, the above apparatus can also be provided on a mobile terminal.

According to the present embodiment, in the present disclosure, based on calendar information or personal information, backgrounds with themes corresponding to the calendar information or the personal information can be selected as candidate backgrounds. Then, a user preference label set of a current user and a background label set of each candidate background are acquired; the current user is matched with each candidate background based on the user preference label set of the current user and the background label set of the candidate background; one or more recommended backgrounds are selected and pushed to a mobile terminal of the current user for changing background. Thereby, it can initiatively change a display background according to the calendar information or the personal information as well as the user preference, providing convenience for the user and satisfying the user needs.

Fig. 6 is a block diagram of another apparatus for changing a display background according to an exemplary embodiment of the present disclosure.

As shown in Fig. 6, the apparatus for changing a display background includes: a label collecting module 501 and a background changing module 502.

The label collecting module 501 is configured to collect a user preference label set of a current user, and send the user preference label set of the current user to a server, for the server to match the current user with each candidate background based on the received user preference label set of the current user and an acquired background label set of the acquired candidate background, and to select one or more recommended backgrounds for the current user based on the matching result.

The background changing module 502 is configured to receive the selected one or more recommended backgrounds which are pushed by the server, for background change.

The apparatus can further include: a calendar/personal-information uploading module 503.

The calendar/personal-information uploading module 503 is configured to upload to the server calendar information or personal information of the current user, for the server to select backgrounds with themes corresponding to the calendar information or the personal information, and to determine the selected backgrounds as candidate backgrounds.

The apparatus of the embodiment of the present disclosure can be provided on a mobile terminal.

Implementation of the functions and operations of the modules in the above devices can be specifically referred to the implementation of the corresponding steps in the above methods, which will not be repeated herein.

For the embodiments regarding apparatuses, since they correspond to the embodiments regarding methods, they can be referred to the description of the method embodiments regarding methods. The embodiments regarding apparatuses described above are merely illustrative. The units described as separate components may be or may not be physically separate, and the components illustrated as units may be or may not be physical units, and may be at the same location, or may be distributed to multiple units over the network. A part of or the whole of the modules can be selected to achieve the objective of the present disclosure as desired. One skilled in the art can understand and practice the embodiments without paying any creative labor.

Correspondingly, the present disclosure also provides a device.

Fig. 7 is a block diagram of a device for changing a display background according to an exemplary embodiment of the present disclosure. The device can be a server.

As shown in Fig. 7, the device includes: a processor 601; and a memory 602 for storing instructions executable by the processor;

wherein the processor 601 is configured to perform:

acquiring a user preference label set of a current user and a background label set of each candidate background; matching the current user with each candidate background based on the user preference label set of the current user and the background label set of the candidate background; selecting one or more recommended backgrounds for the current user based on the matching result; and pushing the selected one or more recommended backgrounds to a mobile terminal of the current user for background change.

It should be noted that, the memory 602 can store other programs, the details of which can be referred to the description of the process of the above methods, and will not be repeated herein. The processor 601 is also configured to perform the other programs stored in the memory 602.

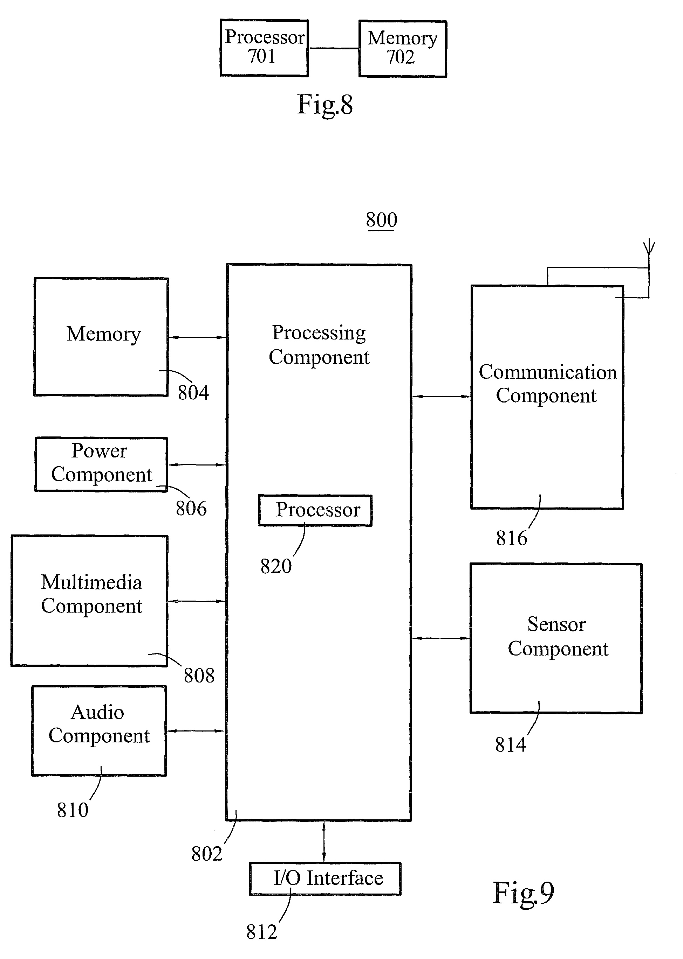

Fig. 8 is a block diagram of another device for changing a display background according to an exemplary embodiment of the present disclosure. The device can be a terminal device.

As shown in Fig. 8, the device includes: a processor 701; and a memory 702 for storing instructions executable by the processor;

wherein the processor 701 is configured to perform:

collecting a user preference label set of a current user, and sending the user preference label set of the current user to a server, for the server to match the current user with each candidate background based on the user preference label set of the current user and an acquired background label set of the acquired candidate background, and to select one or more recommended backgrounds for the current user based on the matching result; and
receiving the selected one or more recommended backgrounds which are pushed by the server, for background change.

Wherein, receiving the selected one or more recommended backgrounds which are pushed by the server, for background change includes:

receiving the one or more recommended backgrounds selected from candidate backgrounds which are selected from backgrounds with themes corresponding to calendar information or personal information of the current user by the server, and changing the desktop of the mobile terminal and/or the lock screen interface to the one or more recommended backgrounds.

Fig. 9 is a block diagram of a device according to an exemplary embodiment of the present disclosure.
For example, the device 800 can be a mobile phone, a computer, a digital broadcast terminal, a messaging device, a gaming console, a tablet, a medical device, exercise equipment, a personal digital assistant, and the like.
Referring to Fig. 9, the device 800 can include one or more of the following components: a processing component 802, a memory 804, a power component 806, a multimedia component 808, an audio component 810, an input/output (I/O) interface 812, a sensor component 814, and a communication component 816.
The processing component 802 typically controls overall operations of the device 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules which facilitate the interaction between the processing component 802 and other components. For instance, the processing component 802 can include a multimedia module to facilitate the interaction between the multimedia component 808 and the processing component 802.
The memory 804 is configured to store various types of data to support the operation of the device 800. Examples of such data include instructions for any applications or methods operated on the device 800, contact data, phonebook data, messages, pictures, video, etc. The memory 804 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.
The power component 806 provides power to various components of the device 800. The power component 806 can include a power management system, one or more power sources, and any other components associated with the generation, management, and distribution of power in the device 800.
The multimedia component 808 includes a screen providing an output interface between the device 800 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 808 includes a front camera and/or a rear camera. The front camera and the rear camera can receive an external multimedia datum while the device 800 is in an operation mode, such as a photographing mode or a video mode. Each of the front camera and the rear camera can be a fixed optical lens system or have focus and optical zoom capability.
The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal can be further stored in the memory 804 or transmitted via the communication component 816. In some embodiments, the audio component 810 further includes a speaker to output audio signals.
The I/O interface 812 provides an interface between the processing component 802 and peripheral interface modules, such as a keyboard, a click wheel, buttons, and the like. The buttons can include, but are not limited to, a home button, a volume button, a starting button, and a locking button.
The sensor component 814 includes one or more sensors to provide status assessments of various aspects of the device 800. For instance, the sensor component 814 can detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 can include a proximity sensor configured to detect the presence of nearby objects without any physical contact. The sensor component 814 can also include a light sensor, such as a CMOS or CCD image sensor, for use in imaging applications. In some embodiments, the sensor component 814 can also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 800 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium is executed by a processor of a device, the device is caused to perform a method for changing a display background. The method includes:

acquiring a user preference label set of a current user and a background label set of each candidate background;
matching the current user with each candidate background based on the user preference label set of the current user and the background label set of the candidate background;
selecting one or more recommended backgrounds for the current user based on the matching result; and
pushing the selected one or more recommended backgrounds to a mobile terminal of the current user for background change.

A non-transitory computer readable storage medium, when instructions in the storage medium is executed by a processor of a device, the device is caused to perform a method for changing a display background. The method includes:

collecting a user preference label set of a current user, and sending the user preference label set of the current user to a server, for the server to match the current user with each candidate background based on the user preference label set of the current user and an acquired background label set of the acquired candidate background, and to select one or more recommended backgrounds for the current user based on the matching result; and
receiving the selected one or more recommended backgrounds which are pushed by the server, for background change.

**Claims**

1. A method for changing a display background, which is suitable to be implemented by a server, **characterized in that** the method comprises steps of:

acquiring (101, 202) a user preference label set of a current user and a background label set of each candidate background of a plurality of candidate backgrounds;
determining (102, 203, 304) a matching degree between the current user and each candidate background based on the user preference label set of the current user and the background label set of the candidate background;
selecting (103, 204, 305) one or more recommended backgrounds for the current user based on the matching degrees; and
sending (104, 205, 306) the selected one or more recommended backgrounds to a mobile terminal of the current user for background change.

2. The method of claim 1, wherein before the step of acquiring a user preference label set of a current user and a background label set of each candidate background, the method comprises steps of:

acquiring (201) calendar information or personal information of the current user, selecting backgrounds with themes corresponding to the calendar information or the personal information, and determining the selected backgrounds as the plurality of candidate backgrounds.

3. The method of claim 1 or 2, wherein the method further comprises a step of:

after the mobile terminal of the current user receives the one or more recommended backgrounds, changing a background of a desktop and/or a lock screen interface of the mobile terminal with the one or more recommended backgrounds.

4. The method of any one of claims 1 to 3, wherein the step of determining a matching degree between the current user and each candidate background based on the user preference label set of the current user and the background label set of the candidate background comprises steps of:

acquiring a correlation between each user preference label in the user preference label set of the current user and each background label in the background label set of a current candidate background, wherein a correlation between a user preference label and a background label is determined according to a number of times that both of the user preference label and the background label are present in the user preference label set of the same user or in the background label set of the same background;

summing up correlations between all of the user preference labels in the user preference label set of the current user and all of the background labels in the background label set of the current candidate background, averaging the sum against a total number of the user preference labels, to obtain a matching degree between the current user and the current candidate background; and

ranking the matching degrees between the current user and all of the candidate backgrounds, to enable selecting one or more recommended backgrounds for the current user based on the matching degrees.

5. The method of claim 4, wherein the step of summing up correlations between all of the user preference labels of the user preference label set of the current user and all of the background labels of the background label set of the current candidate background comprises a step of :

according to a weight of each of the user preference labels of the current user, summing up correlations between all of the user preference labels of the current user and all of the background labels of the current candidate background.

6. The method of claim 5, wherein
the weight of each of the user preference labels is determined according to a basic weight and a behavior weight, the basic weight being a predetermined score value for each of the user preference labels, and the behavior weight being determined according to a preference evaluation for each of the user preference labels.

7. The method of claim 6, wherein the step of determining the behavior weight according to a preference evaluation for each of the user preference labels comprises steps of :

determining the behavior weight according to all score values of preference evaluation of each of the user preference labels during a preset time period where a corresponding background is in use,

wherein a value of the behavior weight increases with increase of a sum of said all score value of preference evaluation, and decreases with decrease of the sum of said all score values of the preference evaluation, and wherein the value of the behavior weight has an increasing or a decreasing rate smaller than a rate at which said sum increases or decreases during the preset time period where the corresponding background is in use, and wherein after said sum reaches a preset value, the value of the behavior weight tends to be constant.

8. An apparatus for changing a display background, which is suitable to be implemented as a server, **characterized in that** the apparatus comprises:

an acquiring module (41) configured to acquire a user preference label set of a current user and a background label set of each candidate background of a plurality of candidate backgrounds;

a matching module (42) configured to determine a matching degree between the current user and each candidate background based on the user preference label set of the current user and the background label set of the candidate background which are acquired by the acquiring module;

a selecting module (43) configured to select one or more recommended backgrounds for the current user based on the matching degrees determined by the matching module; and

a sending module (44) configured to send the one or more recommended backgrounds selected by the selecting module to a mobile terminal of the current user for background change.

9. The apparatus of claim 8, wherein the apparatus further comprises:

a candidate-background determining module (45) configured to acquire calendar information or personal information of the current user, select backgrounds with themes corresponding to the calendar information or the personal information, and determine the selected backgrounds as the plurality of candidate backgrounds.

10. The apparatus of claim 8 or 9, wherein the matching module (42) comprises:

a first processing sub-module (421) configured to acquire a correlation between each user preference label in the user preference label set of the current user and each background label in the background label set of a current candidate background, wherein a correlation between a user preference label and a background label is determined according to a number of times that both of the user preference label and the background label are present in the user preference label set of the same user or in the background label set of the same background;

a second processing sub-module (422) configured to sum up correlations between all of the user preference labels in the user preference label set of the current user and all of the background labels in the background label set of the current candidate background acquired by the first processing sub-module, average the sum against a total number of the user preference labels of the current user, to obtain a matching degree between the current user and the current candidate background; and

a third processing sub-module (423) configured to rank the matching degrees between the current user and all of the candidate backgrounds acquired by the second processing sub-module, to enable selecting one or more recommended backgrounds for the current user based on the matching degrees.

11. An apparatus for changing a display background, which is suitable to be implemented as a terminal, **characterized in that** the apparatus comprises:

a label collecting module (501) configured to collect a user preference label set of a current user, and send the user preference label set of the current user to a server, for the server to determine a matching degree between the current user and each candidate background of a plurality of candidate backgrounds based on the received user preference label set of the current user and a background label set of each candidate background, and to select one or more recommended backgrounds for the current user based on the matching degrees; and

a background changing module (502) configured to receive the selected one or more recommended backgrounds which are sent by the server, for background change.

12. A device for changing a display background, which is suitable to be implemented as a server, comprising:

a processor; and a memory for storing instructions executable by the processor;
wherein the processor is configured to perform:

acquiring a user preference label set of a current user and a background label set of each candidate background of a plurality of candidate background;

determining a matching degree between the current user and each candidate background based on the user preference label set of the current user and the background label set of the candidate background;

selecting one or more recommended backgrounds for the current user based on the matching degrees; and

sending the selected one or more recommended backgrounds to a mobile terminal of the current user for background change.

13. A device for changing a display background, which is suitable to be implemented as a terminal, comprising:

a processor; and a memory for storing instructions executable by the processor;
wherein the processor is configured to perform:

collecting a user preference label set of a current user, and sending the user preference label set of the current user to a server, for the server to determine a matching degree between the current user and each candidate background of a plurality of candidate backgrounds based on the user preference label set of the current user and a background label set of each candidate background, and to select one or more recommended backgrounds for the current user based on the matching degrees; and

receiving the selected one or more recommended backgrounds which are sent by the server, for background change.

14. A computer program including instructions for executing the steps of a method for changing a display background according to any one of claims 1 to 7 when said program is executed by a computer.

15. A recording medium readable by a computer and having recorded thereon a computer program including instructions for executing the steps of a method for changing a display background according to any one of claims 1 to 7.

Acquiring User Preference Label Set of Current User and Background Label Set of Each Candidate Background ~101

Determinining a matching degree between Current User and Each Candidate Background Based on User Preference Label Set of Current User and Background Label Set of Candidate Background ~102

Selecting One or More Recommended Backgrounds for Current User Based on Matching Degree ~103

Sending Selected One or More Recommended Backgrounds to Mobile Terminal of Current User for Background Change ~104

Fig.1

Acquiring Calendar Information or Personal
Information of Current User, Selecting
Backgrounds with Themes Corresponding to
Calendar Information or Personal Information and
Determining Selected Backgrounds as Candidate
Backgrounds
~ 201

Acquiring User Preference Label Set of Current
User and Background Label Set of Each Candidate
Background
~ 202

Determining a matching degree between
Current User and Each Candidate
Background Based on User Preference Label Set
of Current User and Background Label Set of
Candidate Background
~ 203

Selecting One or More Recommended
Backgrounds for Current User Based on Matching
Degree
~ 204

Sending Selected One or More Recommended
Backgrounds to Mobile Terminal of Current User
for Background Change
~ 205

Fig.2

Selecting Backgrounds of Different Themes as Candidate Backgrounds ~ 301

Acquiring Background Label Set of Each of Candidate Backgrounds ~ 302

Acquiring User Preference Label Set of Current User ~ 303

Determinining a matching degree between Current User and Each Candidate Background Based on User Preference Label Set of Current User and Background Label Set of Candidate Background ~ 304

Selecting One or More Recommended Backgrounds for Current User Based on Matching Degree ~ 305

Sendinging Selected One or More Recommended Backgrounds to Mobile Terminal of Current User for Background Change ~ 306

Fig.3

| Acquiring Module 41 | Matching Module 42 | Selecting Module 43 | Sending Module 44 |

Fig.4

...

Fig.5

Fig.6

Fig.7

Fig.8

Fig.9

Europäisches
Patentamt

European
Patent Office

Office européen
des brevets

## EUROPEAN SEARCH REPORT

Application Number

EP 16 16 6824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/211575 A1 (COLLINS MAURA [US] ET AL) 19 August 2010 (2010-08-19) * abstract * * paragraph [0016] - paragraph [0017] * * paragraph [0022] - paragraph [0034] * * figures 2,3 * | 1-15 | INV. G06Q30/00 |
| X | WO 2007/106842 A2 (NUMOBIQ INC [US]; ROGERS MICHAEL [US]; YOUNG MARK [US]) 20 September 2007 (2007-09-20) * abstract * * paragraph [0072] - paragraph [0077] * * paragraph [0107] - paragraph [0108] * * figures 11-14, 20 * | 1-15 | |
| X | EP 2 076 001 A1 (QUALCOMM INC [US]) 1 July 2009 (2009-07-01) * abstract * * paragraph [0024] - paragraph [0027] * * paragraph [0031] - paragraph [0036] * * paragraph [0039] - paragraph [0046] * * figures 2-5 * | 1-15 | |

TECHNICAL FIELDS
SEARCHED     (IPC)

G06Q

The present search report has been drawn up for all claims

| Place of search | Date of completion of the search | Examiner |
|---|---|---|
| The Hague | 9 December 2016 | Stark, Konrad |

EPO FORM 1503 03.82 (P04C01)

**ANNEX TO THE EUROPEAN SEARCH REPORT
ON EUROPEAN PATENT APPLICATION NO.**

EP 16 16 6824

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2016

| Patent document cited in search report | | | Publication date | Patent family member(s) | | | Publication date |
|---|---|---|---|---|---|---|---|
| US 2010211575 | A1 | | 19-08-2010 | US | 2010211575 | A1 | 19-08-2010 |
| | | | | WO | 2010093953 | A2 | 19-08-2010 |
| WO 2007106842 | A2 | | 20-09-2007 | US | 2007220103 | A1 | 20-09-2007 |
| | | | | WO | 2007106842 | A2 | 20-09-2007 |
| EP 2076001 | A1 | | 01-07-2009 | CN | 101946498 | A | 12-01-2011 |
| | | | | EP | 2076001 | A1 | 01-07-2009 |
| | | | | JP | 5684218 | B2 | 11-03-2015 |
| | | | | JP | 2011508571 | A | 10-03-2011 |
| | | | | JP | 2013081195 | A | 02-05-2013 |
| | | | | KR | 20100101159 | A | 16-09-2010 |
| | | | | US | 2009163182 | A1 | 25-06-2009 |
| | | | | WO | 2009082755 | A1 | 02-07-2009 |

EPO FORM P0459

For more details about this annex : see Official Journal of the European Patent Office, No. 12/82